# EUROPEAN PATENT SPECIFICATION

(11) **EP 2 089 820 B1**
(45) Date of publication and mention of the grant of the patent: **21.08.2013**
(21) Application number: 07827039.4
(22) Date of filing: 09.11.2007
(51) Int. Cl.: G06F 17/30, G11B 27/031

(54) **METHOD AND APPARATUS FOR GENERATING A SUMMARY OF A VIDEO DATA STREAM**
VERFAHREN UND VORRICHTUNG ZUR ERSTELLUNG EINER ZUSAMMENFASSUNG EINES VIDEODATENSTROMS
PROCÉDÉ ET APPAREIL POUR GÉNÉRER UN RÉSUMÉ D'UN FLUX DE DONNÉES VIDÉO

(30) Priority: 14.11.2006 EP 06123981
(43) Date of publication of application: 19.08.2009
(73) Proprietor: Koninklijke Philips Electronics N.V., 5621 BA Eindhoven (NL)
(72) Inventor: MCKINNEY, Martin F., 5656 AE Eindhoven (NL); EHLERS, Enno L., 5656 AE Eindhoven (NL); BARBIERI, Mauro, 5656 AE Eindhoven (NL); FONSECA, Pedro, 5656 AE Eindhoven (NL)
(74) Representative: Uittenbogaard, Frank
(86) International application number: PCT/IB2007/054558
(87) International publication number: WO 2008/059416

(56) References cited:
- US-A1- 2002 126 143
- US-A1- 2002 126 203
- US-A1- 2006 075 454

## Description

### FIELD OF THE INVENTION

The present invention relates to generating a summary of a video data stream to include a representation of textual information.

### BACKGROUND OF THE INVENTION

Sport broadcasts constitute a major percentage of television's broadcasts. While current consumer products like HDD-recorders and Media Center PC's give users the possibility to record a lot of sport content, they lack the possibility of easily browsing through the recordings and shortening lengthy sports events into essential parts such as a summary including major events of the sport broadcast, for example, scoring a goal.

For this purpose, many automatic sport summarization systems have been developed for example as proposed in Ekin, A.M. Tekalp and R. Mehrotra, "Automatic Soccer Video analysis and summarization", IEEE Trans. Image Processing, June 2003. Based on the detection of important events in the video (e.g. free kicks, goals, etc.), these systems select clips from the video material to create an overview of the important moments of a match or sport event.

In sport broadcasts textual information is usually displayed during the broadcast to relay information such as the score, or alternatively a physical scoreboard may be captured. Invariably, this information is not displayed continuously throughout the broadcast. This often happens in replay and slow-motion scenes. Automatically generated summaries invariably include many replay and slow-motion scenes and as a result the textual information (score) is not displayed during playback of the summary.

However, it is often desirable to have this information available. Users find it difficult to understand fragments of a broadcast displayed out of their context as playback of a summary. Having such textual information visible would improve the perceived quality of the automatically generated sport summaries.

US 2002/0126143 A1 discloses a method that can effectively summarize news video anf an article-based video-browsing system that enables effective searching and filtering using the method. An article-based news video content summary method, browsing interface and browsing system are provided that summarize and browse at least one news article by using an anchor key frame, an episode key frame, a synthetic text key frame and a news icon of the news video stream. The anchor key frame is extracted from an anchor shot. The episode key frame is extracted fron an episode scene. The synthetic text key frame is generated by summarizing important texts in video frames in the news article to be an image. The news icon includes an image, graphical element and so forth which appear in an anchor shot to summarize contents of the news article.

### SUMMARY OF THE INVENTION

The present invention seeks to provide automatic summarization of a video data stream in which a representation of textual information is included.

This is achieved according to an aspect of the present invention by a method of generating a summary of a video data stream, the video data stream comprising a plurality of frames, the method comprising the steps of: detecting a representation of textual information displayed in a video data stream; generating a summary of the video data stream, the summary comprising a selection of the plurality of frames of the video data stream, wherein in at least one of the selected frames of the video data stream not having textual information, textual information detected in a previous or successive frame is incorporated.

This is also achieved according to another aspect of the present invention by an apparatus for generating a summary of a video data stream, the video data stream comprising a plurality of frames, the apparatus comprising: a detector for detecting representation of textual information displayed in a video data stream; means for generating a summary of the video data stream, the summary comprising a selection of the plurality of frames of the video data stream, wherein in at least one of the selected frames of the video data stream not having textual information, textual information detected in a previous or successive frame is incorporated.

The summary may be generated by incorporating detected textual information into at least one other frame and selecting a plurality of frames to generate the summary including the at least one other frame incorporating the detected textual information. Alternatively, the summary is generated by selecting a plurality of frames and incorporating the detected textual information. In this way, the summary will automatically include information which was displayed in a frame not, necessarily, included in the summary in order to ensure that the user has all information available, such as up to date scores, or various statistical information for the game etc.

In a preferred embodiment, a target object may be recognized and data such as their name etc can be displayed upon their appearance in the summary.

### BRIEF DESCRIPTION OF DRAWINGS

For a more complete understanding of the present invention, reference is now made to the following description taken in conjunction with the accompanying drawings in which:
Fig. 1 is a simplified schematic of apparatus according to a first embodiment; and
Fig. 2 is a simplified schematic of apparatus according to a second embodiment.

### DETAILED DESCRIPTION OF EMBODIMENTS OF THE INVENTION

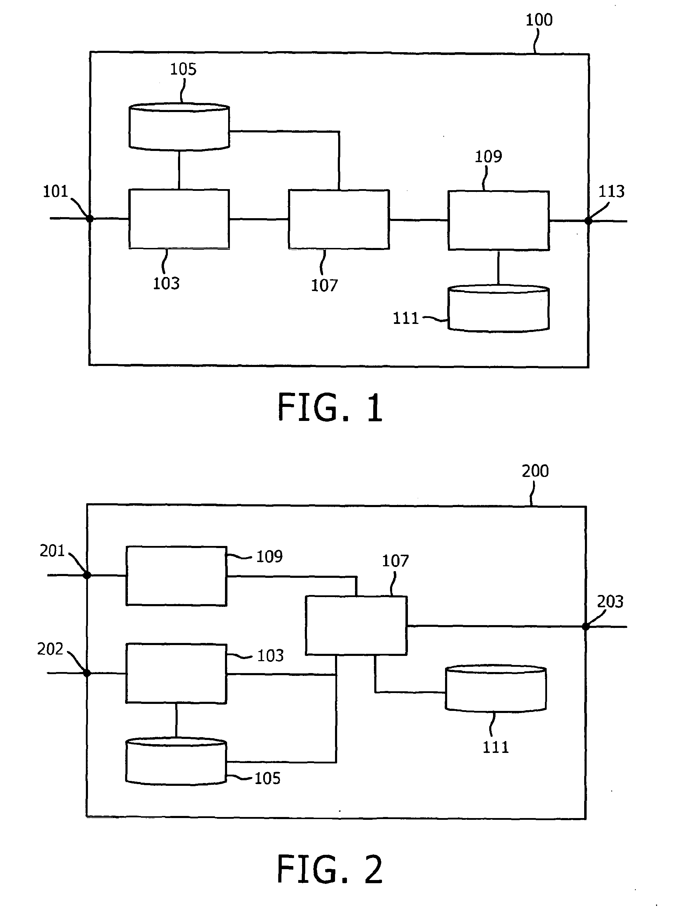

A first embodiment of the present invention will now be described with reference to Fig. 1. The apparatus 100 comprises an input terminal 101. The input terminal 101 is connected to a detector 103 for automatic detection of a representation of textual information such as on-screen graphical information data or a physical scoreboard, for example, using any known methods, for example D. Zhang, R. K. Rajendran, and S.-F. Chang, "General and domain specific techniques for detecting and recognizing superimposed text in video", IEEE 2002 International Conference on Image Processing, Rochester, NY.

The detector 103 is connected to a local storage means (clipboard) 105 and pasting means 107. The pasting means 107 is connected to a summary generator 109. The summary generator 109 is connected to storage means 111 and an output terminal 113.

Operation of the apparatus will now be described in more detail. A video data stream such as a sports broadcast is input on the input terminal 101. The video data stream comprises a plurality of frames. The detector 103 detects representation of textual information displayed in a frame of the input video data stream which is extracted and stored in the local storage means 105. Data relating to which frame (or frames) the textual information is displayed in is also recorded in the local storage means 105.

The input video data stream is then input into the pasting means 107 in which frames (or at least one frame) having no textual information is identified and the representation of the textual information in a previous or successive frame stored in the local storage means (105) is pasted into the frames not having textual information.

The representation of textual information to be pasted may be selected as that information which has been shown in a frame closest to the frame having no textual information. In this way, the most relevant textual information is displayed in that frame of the summary. The representation of textual information may be selected on the basis of being displayed in a previous frame(s) and the text may be pasted into all subsequent frames having no textual information until new textual information is detected.

The summary generator 109 then summarizes the edited video data stream by selecting frames containing events, for example detecting the occurrences of replays and slow-motion scenes. As additional frames, preferably all frames, now include a representation of textual information, the summary will now include textual information. The summary may be stored in the storage means 111 and output on the output terminal 113 for playback as required.

A second embodiment of the present invention will now be described with reference to Fig. 2. The apparatus 200 comprises first and second input terminals 201, 202. The first input terminal 201 is connected to a summary generator 109 similar to that of Fig. 1. The second input terminal 202 is connected to a detector 103. The detector 103 is connected to a local storage means 105 as in the first embodiment. The detector 103 and the summary generator 109 are connected to a pasting mean 107. The pasting means 107 is connected to a storage means 111 and an output terminal 213.

The elements of the apparatus 200 of Fig. 2 are similar to the corresponding elements of the apparatus 100 of Fig. 1 and a detailed description of their operation will not be described here. The summary generator 109 generates the summary by selecting a plurality of the frames from the video data stream input on the first input terminal 201. The summarized video data stream is then input into the pasting means 107 to which textual information detected and extracted by the detector 103 as described with reference to the first embodiment is incorporated. The edited summary is then output on the output terminal 203 or stored in the storage means 111 for later playback as required.

The representation of textual information may include on-screen graphical representation of the score of a sport event or may include other data such as various statistics and information about specific players, the game, context, etc or alternatively may be a physical scoreboard captured by the video.

The detected textual information may also include information associated to its context (e.g. statistics about a player are shown when that player is shown) and displayed in the summary when the same context appears (e.g. same player) in the summary. In this respect recognition of the player may be made by extracting facial features and using known recognition techniques recognize the player and then upon subsequent appearance of the player in the summary, textual information associated with that player may be displayed.

The apparatus may utilized in digital video recorders, TV's, automatic summarization systems, video on demand systems, etc.

Although preferred embodiments of the present invention have been illustrated in the accompanying drawings and described in the foregoing description, it will be understood that the invention is not limited to the embodiments disclosed but capable of numerous modifications without departing from the scope of the invention as set out in the following claims. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware. 'Computer program product' is to be understood to mean any software product stored on a computer-readable medium, such as a floppy disk, downloadable via a network, such as the Internet, or marketable in any other manner.

## Claims

1. A method of generating a summary of a video data stream, said video data stream comprising a plurality of frames, the method comprising the steps of:
- detecting a representation of textual information displayed in a video data stream;
- generating a summary of said video data stream, **characterised in that** said summary comprises a selection of said plurality of frames of said video data stream, wherein in at least one of the selected frames of the video data stream not having textual information, textual information detected in a previous or successive frame is incorporated.

2. A method according to claim 1, wherein the step of generating a summary of said video data stream comprises the steps of:
- incorporating said detected representation of textual information into at least one other frame of said video data stream;
- selecting a plurality of frames including said at least one other frame incorporating said detected representation of textual information to generate said summary.

3. A method according to claim 1, wherein the step of generating a summary of said video data stream comprises the steps of:
- selecting a plurality of frames to generate said summary;
- incorporating detected representation of textual information into at least one of said selected frames.

4. A method according to claim 1, wherein said detected representation of textual information is incorporated into all subsequent frames until a new representation of textual information is detected.

5. A method according to claim 1, wherein the method further comprises the step of:
- recognizing an object in said video data stream; and
- generating a summary of said video data stream displaying detected representation of textual information associated with said recognized object upon subsequent appearances of said recognized object.

6. A method according to claim 1, wherein said representation of textual information includes indication of a score.

7. A computer program product comprising a plurality of program code portions for carrying out the method according to any one of the preceding claims.

8. Apparatus for generating a summary of a video data stream, said video data stream comprising a plurality of frames, the apparatus comprising:
- a detector for detecting a representation of textual information displayed in a video data stream;
- means for generating a summary of said video data stream, **characterised in that** said summary comprises a selection of said plurality of frames of said video data stream, wherein in at least one of the selected frames of the video data stream not having textual information, textual information detected in a previous or successive frame is incorporated.

## Patentansprüche

1. Verfahren zur Erstellung einer Zusammenfassung eines Videodatenstroms, wobei der Videodatenstrom eine Mehrzahl von Frames umfasst, wobei das Verfahren die folgenden Schritte umfasst, wonach:
- eine Darstellung von in einem Videodatenstrom angezeigten Textinformationen detektiert wird;
- eine Zusammenfassung des Videodatenstroms erstellt wird, **dadurch gekennzeichnet, dass** die Zusammenfassung eine Auswahl der Mehrzahl von Frames des Videodatenstroms umfasst, wobei in mindestens einen der ausgewählten Frames des Videodatenstroms, der keine Textinformationen aufweist, in einem vorhergehenden oder nachfolgenden Frame detektierte Textinformationen eingefügt werden.

2. Verfahren nach Anspruch 1, wobei der Schritt des Erstellens einer Zusammenfassung des Videodatenstroms die folgenden Schritte umfasst, wonach:
- die detektierte Darstellung von Textinformationen in mindestens einen weiteren Frame des Videodatenstroms eingefügt wird;
- eine Mehrzahl von Frames, die den mindestens einen weiteren Frame enthalten, in den die detektierte Darstellung von Textinformationen aufgenommen wird, ausgewählt wird, um die Zusammenfassung zu erstellen.

3. Verfahren nach Anspruch 1, wobei der Schritt des Erstellens einer Zusammenfassung des Videodatenstroms die folgenden Schritte umfasst, wonach:
- eine Mehrzahl von Frames ausgewählt wird, um die Zusammenfassung zu erstellen;
- die detektierte Darstellung von Textinformationen in mindestens einen der ausgewählten Frames eingefügt wird.

4. Verfahren nach Anspruch 1, wobei die detektierte Darstellung von Textinformationen in alle nachfolgenden Frames eingefügt wird, bis eine neue Darstellung von Textinformationen detektiert wird.

5. Verfahren nach Anspruch 1, wobei das Verfahren weiterhin die folgenden Schritte umfasst, wonach:
- ein Objekt in dem Videodatenstrom erkannt wird; und
- eine Zusammenfassung des Videodatenstroms erstellt wird, welche die detektierte Darstellung von Textinformationen in Verbindung mit dem erkannten Objekt bei anschließenden Auftritten des erkannten Objekts zeigt.

6. Verfahren nach Anspruch 1, wobei die Darstellung von Textinformationen eine Angabe eines Spielstands enthält.

7. Computerprogrammprodukt mit mehreren Programmcodeteilen zur Ausführung des Verfahrens nach einem der vorangegangenen Ansprüche.

8. Vorrichtung zur Erstellung einer Zusammenfassung eines Videodatenstroms, wobei der Videodatenstrom eine Mehrzahl von Frames umfasst, wobei die Vorrichtung umfasst:
- einen Detektor zum Detektieren einer Darstellung von in einem Videodatenstrom angezeigten Textinformationen;
- Mittel zur Erstellung einer Zusammenfassung des Videodatenstroms, **dadurch gekennzeichnet, dass** die Zusammenfassung eine Auswahl der Mehrzahl von Frames des Videodatenstroms umfasst, wobei in mindestens einen der ausgewählten Frames des Videodatenstroms, der keine Textinformationen aufweist, in einem vorhergehenden oder nachfolgenden Frame detektierte Textinformationen eingefügt werden.

## Revendications

1. Procédé permettant de générer un résumé d'un flux de données vidéo, ledit flux de données vidéo comprenant une pluralité de trames, le procédé comprenant les étapes suivantes :
- la détection d'une représentation d'informations textuelles présentées dans un flux de données vidéo ;
- la génération d'un résumé dudit flux de données vidéo, **caractérisé en ce que** ledit résumé comprend une sélection de ladite pluralité de trames dudit flux de données vidéo, dans laquelle dans au moins une des trames sélectionnées du flux de données vidéo ne contenant pas d'informations textuelles, les informations textuelles détectées dans une trame précédente ou successive sont incorporées.

2. Procédé selon la revendication 1, dans lequel l'étape de génération d'un résumé dudit flux de données vidéo comprend les étapes suivantes :
- l'incorporation de ladite représentation détectée d'informations textuelles dans au moins une autre trame dudit flux de données vidéo ;
- la sélection d'une pluralité de trames incluant ladite au moins une autre trame incorporant ladite représentation détectée d'informations textuelles pour générer ledit résumé.

3. Procédé selon la revendication 1, dans lequel l'étape de génération d'un résumé dudit flux de données vidéo comprend les étapes suivantes :
- la sélection d'une pluralité de trames pour générer ledit résumé ;
- l'incorporation de la représentation détectée d'informations textuelles dans au moins une desdites trames sélectionnées.

4. Procédé selon la revendication 1, dans lequel ladite représentation détectée d'informations textuelles est incorporée dans toutes les trames suivantes jusqu'à ce qu'une nouvelle représentation d'informations textuelles soit détectée.

5. Procédé selon la revendication 1, dans lequel le procédé comprend en outre les étapes suivantes :
- la reconnaissance d'un objet dans ledit flux de données vidéo ; et
- la génération d'un résumé dudit flux de données vidéo présentant la représentation détectée d'informations textuelles associée audit objet reconnu lors des apparitions ultérieures dudit objet reconnu.

6. Procédé selon la revendication 1, dans lequel ladite représentation d'informations textuelles comprend l'indication d'un score.

7. Produit de programme informatique comprenant une pluralité de parties de code de programme permettant de mettre en oeuvre le procédé selon l'une quelconque des revendications précédentes.

8. Appareil permettant de générer un résumé d'un flux de données vidéo, ledit flux de données vidéo comprenant une pluralité de trames, l'appareil comprenant :
- un détecteur servant à détecter une représentation d'informations textuelles présentées dans un flux de données vidéo ;
- un moyen servant à générer un résumé dudit flux de données vidéo, **caractérisé en ce que** ledit résumé comprend une sélection de ladite pluralité de trames dudit flux de données vidéo, dans laquelle dans au moins une des trames sélectionnées du flux de données vidéo ne contenant pas d'informations textuelles, les informations textuelles détectées dans une trame précédente ou successive sont incorporées.
